(19) **Europäisches Patentamt European Patent Office Office européen des brevets**

(11) **EP 3 696 958 B1**

(12) **EUROPEAN PATENT SPECIFICATION**

(45) Date of publication and mention of the grant of the patent:
**13.10.2021 Bulletin 2021/41**

(51) Int Cl.:
*H02M 1/32* (2007.01)      *H02M 3/335* (2006.01)
*H02M 1/00* (2006.01)

(21) Application number: **19157366.6**

(22) Date of filing: **15.02.2019**

(54) **FLYBACK CONVERTER AND METHOD OF OPERATING SUCH A CONVERTER**

SPERRWANDLER UND BETRIEBSWEISE FÜR EINEN DERARTIGEN SPERRWANDLER

CONVERTISSEUR FLYBACK ET MODE DE FONCTIONNEMENT D'UN TEL CONVERTISSEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.08.2020 Bulletin 2020/34**

(73) Proprietor: **Infineon Technologies Austria AG 9500 Villach (AT)**

(72) Inventors:
 • **Wang, Zan 540142 Singapore (SG)**
 • **Luo, Jun Yang 120359 Singapore (SG)**

(74) Representative: **Westphal, Mussgnug & Partner, Patentanwälte mbB Werinherstraße 79 81541 München (DE)**

(56) References cited:
**US-A1- 2016 329 814     US-A1- 2018 241 299 US-A1- 2018 358 902**

**Description**

**TECHNICAL FIELD**

Embodiments of the present invention relate to a voltage conversion circuit, such as a flyback converter.

**BACKGROUND**

Switched mode voltage converters (switched mode power supplies, SMPS) are widely used for power conversion in automotive, industrial, or consumer electronic applications. A flyback converter is a specific type of switched mode voltage converter, which includes a transformer with a primary winding and a secondary winding. An electronic switch is connected in series with the primary winding, whereas the transformer is magnetized when the electronic switch is closed and demagnetized when the electronic switch is opened. Magnetizing the transformer includes storing energy in the transformer, and demagnetizing the transformer includes transferring the stored energy to the secondary winding and a load coupled thereto.

A flyback converter can be operated in a discontinuous conduction mode (DCM). In this operation mode there is a delay time between the time when the transformer has been completely demagnetized and the time when the electronic switch again switches on. During this delay time, parasitic oscillations of a voltage across the electronic switch may occur. In the DCM, the flyback converter may be operated in a quasi-resonant operation mode, in which the electronic switch switches on at those times when the voltage across the electronic switch reaches a minimum. When operating the flyback converter in the quasi-resonant mode the switching frequency of the electronic switch varies, while operating the electronic switch in the flyback converter at a fixed frequency may result in increased switching losses. Nevertheless, there may be scenarios where it is desirable to operate a flyback converter in the DCM at a fixed frequency. One example of such a flyback converter is described in the publication US 2016/0329814 A1. The concepts explained in this publication allow to maintain (quasi-) resonant operation although the switching frequency is substantially constant (fixed frequency resonant operation). However, in this mode of operation problems may occur when using a synchronous rectifier at the secondary side of the flyback converter.

Another example of a flyback converter with a synchronous rectifier is described in the publication US 2018/0241299 A1.

**SUMMARY**

A switching converter is described herein and contains the features of independent claim 1.

Furthermore, a method for operating a switching converter is described herein comprising the features of independent claim 11.

**BRIEF DESCRIPTION OF THE DRAWINGS**

The embodiments described herein can be better understood with reference to the following description and drawings. The components in the figures are not necessarily to scale, emphasis instead being placed upon illustrating the principles of the embodiments. Furthermore, in the figures, like reference numerals designate corresponding parts. In the drawings:

Figure 1 illustrates one exemplary implementation of a flyback converter.

Figure 2 includes timing diagrams illustrating quasi-resonant operation of the flyback converter.

Figure 3 includes timing diagrams illustrating fixed-frequency operation of the flyback converter.

Figure 4 illustrates one exemplary implementation of a flyback converter configured to perform fixed frequency (quasi-) resonant operation.

Figure 5 illustrates one embodiment of a flyback converter using a synchronous rectifier.

Figure 6 includes timing diagrams illustrating the operation of a synchronous rectifier, which is be used in the flyback converter of Fig. 5.

Figure 7 includes timing diagrams illustrating an undesired early switch-on of the synchronous rectifier which may occur during fixed frequency operation of a flyback converter.

Figure 8 illustrates one example of a modified pre-charging circuit that may be used in the embodiment of Fig. 5 to avoid the mentioned early witch-on of the synchronous rectifier.

Figure 9 illustrates another example of a modified pre-charging circuit that may be used in the embodiment of Fig. 5 to avoid the mentioned early witch-on of the synchronous rectifier.

## DETAILED DESCRIPTION

In the following detailed description, reference is made to the accompanying drawings. The drawings form a part of the description and by way of illustration show specific embodiments in which the invention may be practised. It is to be understood that the features of the various embodiments described herein may be combined with each other, unless specifically noted otherwise.

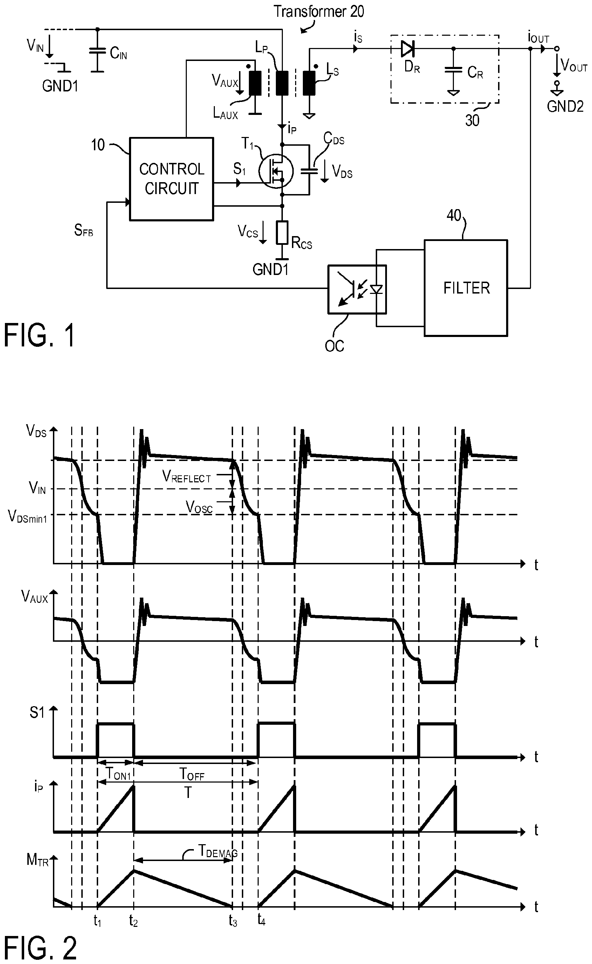

Fig. 1 illustrates an exemplary implementation of a voltage converter (switched mode power supply, SMPS). The voltage converter shown in Figure 1 has a flyback converter topology and will briefly be referred to as flyback converter in the following. The flyback converter includes an input with a first input node and a second input node configured to receive an input voltage $V_{IN}$ and an output with a first output node and a second output node configured to provide an output voltage $V_{OUT}$. A load coupled to the output nodes (not shown in Fig. 1) may receive the output voltage $V_{OUT}$ and an output current $i_{OUT}$ available at the output, respectively. The flyback converter includes a transformer 20 with a primary winding $L_P$ and a secondary winding $L_S$ magnetically coupled with the primary winding $L_P$. The primary winding $L_P$ and the secondary winding $L_S$ have opposite winding orientation. An electronic switch $T_1$ (e.g. MOS-Transistor) is connected in series with the primary winding $L_P$ wherein the series circuit with the primary winding $L_P$ and the electronic switch $T_1$ is connected between the first and second input nodes to receive the input voltage $V_{IN}$.

Optionally, a capacitor $C_{IN}$, which will be referred to as input capacitor in the following, is connected between input nodes. This input capacitor $C_{IN}$ may help to filter ripples of the input voltage $V_{IN}$, particularly in applications in which the input voltage $V_{IN}$ is generated from an alternating voltage (AC voltage) by a rectifier circuit (not shown in the figures). Accordingly, the input voltage is a DC voltage and referenced to a first ground node GND1, whereas the output voltage is referenced to a second ground node GND2.

The flyback converter of Fig. 1 further includes a rectifier circuit 30 connected between the secondary winding $L_S$ and the output. In the embodiment shown in Figure 1, this rectifier circuit 30 includes a series circuit with a rectifier element $D_R$, such as a diode, and a capacitor $C_R$. This series circuit is connected in parallel with the secondary winding $L_S$, wherein the output voltage $V_{OUT}$ is available across the capacitor 32. However, this is only a simplified exemplary implementation of the rectifier circuit 30. Other implementations of the rectifier circuit 30 may be used as well and examples will be discussed later.

A control circuit 10 is configured to drive the electronic switch $T_1$ based on a feedback signal $S_{FB}$ received from a feedback circuit (control loop). The feedback circuit may include a filter 40 (including e.g. a PID regulator) that receives the output voltage $V_{OUT}$ and a transmitter circuit OC. In the embodiment shown in Fig. 1, the filter 40 is on the secondary side of the transformer 20, and the transmitter OC transmits an output signal of the filter 40 across a galvanic isolation from the secondary side to the primary side, whereas an output signal of the transmitter OC is the feedback signal $S_{FB}$ received by the control circuit 10. The filter 40 is configured to generate an error signal from the output voltage and a reference signal (not shown in Fig. 1) and to generate the feedback signal $S_{FB}$ based on the error signal. This is commonly known so that no further detailed explanation is required in this regard.

According to one embodiment, the filter 40 has one of a proportional (P) characteristic, a proportional-integral (PI) characteristic, a proportional-integral, derivative (PID) characteristic. According to another embodiment (not shown), the position of the filter 40 and the transmitter OC in the feedback loop is interchanged so that the transmitter transmits a signal representing the output voltage $V_{OUT}$ across the galvanic isolation from the secondary side to the primary side and the filter receives the signal transmitted by the transmitter and generates the feedback signal $S_{FB}$. In the embodiment shown, the transmitter OC includes an optocoupler. However, this is only an example. Other transmitters suitable to transmit a signal via a galvanic isolation (also referred to as potential barrier) may be used as well. Examples of such transmitter include a transmitter with a transformer, such as a coreless transformer.

The control circuit 10 is configured to operate the electronic switch 1 in a pulse-width modulated (PWM) fashion. According to one embodiment, the electronic switch 1 is a transistor. In the embodiment shown in Figure 1, the transistor is a MOSFET (Metal Oxide Semiconductor Field-Effect Transistor), in particular an n-type MOSFET. However, this is only an example. Other types of transistors, such as an IGBT (Insulated Gate Bipolar Transistor), a JFET (Junction Field-Effect Transistor), a BJT (Bipolar Junction Transistor), or p-type MOSFET may be used as well.

One way of operating the flyback converter shown in Fig. 1 is explained with reference to Figure 2 below. Fig. 2 illustrates timing diagrams of a load path voltage $V_{DS}$ across a load path of the electronic switch $T_1$, an auxiliary voltage

$V_{AUX}$ across an auxiliary winding $L_{AUX}$ of the transformer 20, a drive signal $S_1$ received by the electronic switch $T_1$ from the control circuit 10, a load current $i_P$ through the electronic switch $T_1$ (primary current of the transformer 20), and a magnetization $M_{TR}$ of the transformer 20. In case of the MOSFET $T_1$ shown in Figure 1, the load path voltage $V_{DS}$ is the drain-source voltage, and the load current $i_P$ is the drain-source current. The drive signal $S_1$ is received by a gate node of the MOSFET $T_1$. The drive signal $S_1$ may have one of a first signal level that switches on the electronic switch $T_1$, and a second signal level that switches off the electronic switch $T_1$. The first level will be referred to as on-level and the second signal level will be referred to as off-level in the following. Just for the purpose of explanation, the on-level of the drive signal $S_1$ is drawn as a high signal level in the diagrams of Figure 2, and the off-level is drawn as a low level.

Referring to Figure 2, operating the flyback converter includes a plurality of successive drive cycles, wherein, in each drive cycle, the control circuit 10 switches on the electronic switch $T_1$ for an on-period $T_{ON1}$ and, after the on-period $T_{ON1}$, switches off the electronic switch $T_1$ for an off-period $T_{OFF}$. In the embodiment shown in Fig. 2, one of these drive cycles begins at time $t_1$ and ends at time $t_4$, which is when the next drive cycle starts. During the on-period $T_{ON1}$, the input voltage $V_{IN}$ causes the load current $i_P$ to flow through the primary winding $L_P$ and the electronic switch $T_1$, whereby a current level of the primary current $i_P$ increases during the on-period $T_{ON1}$. This increasing primary current $i_P$ is associated with an increasing magnetization $M_{TR}$ of the transformer 20, whereas such magnetization is associated with magnetically storing energy in the transformer 20 (more precisely, in an air gap of the transformer 2), whereas the stored energy increases as the primary current $i_P$ increases. During the on-period $T_{ON1}$, the load path voltage $V_{DS}$ of the electronic switch $T_1$ is substantially zero, and a voltage across the primary winding $L_P$ substantially equals the input voltage $V_{IN}$ (neglecting the voltage drop across the electronic switch $T_1$ when switched on). In the embodiment shown in Fig. 1, the auxiliary winding $L_{AUX}$ and the primary winding $L_P$ have opposite winding orientation. In this case, a voltage level of the auxiliary voltage $V_{AUX}$ is given by

$$V_{AUX} = -(N_{AUX}/N_P) \cdot V_P, \tag{1}$$

wherein $N_{AUX}$ denotes the number of windings of the auxiliary winding $L_{AUX}$, $N_P$ denotes the number of windings of the primary winding $L_P$, and $V_P$ is the voltage across the primary winding $L_P$. Thus, during the on-period $T_{ON1}$, the voltage level of the auxiliary voltage $V_{AUX}$ is $-N_{AUX}/N_P \cdot V_{IN}$ ($V_P \approx V_{IN}$ when the switch is on).

When the electronic switch $T_1$ switches off, the energy stored in the transformer 20 is transferred to the secondary winding $L_S$, the rectifier circuit 30, and, finally, to the load. This causes the transformer 20 to be demagnetized. In Fig. 2, $T_{DEMAG}$ denotes a time period during which the transformer 20 is demagnetized. That is, in which energy is transferred to the secondary side of the transformer 20. In this time period $T_{DEMAG}$, which is also referred to as demagnetizing period in the following, the load path voltage $V_{DS}$ substantially equals the input voltage $V_{IN}$ plus a reflected voltage $V_{REFLECT}$. The reflected voltage $V_{REFLECT}$ is substantially given by

$$V_{REFLECT} = N_P/N_S \cdot (V_{OUT} + V_R), \tag{2}$$

where $N_P$ is the number of windings of the primary winding $L_P$, $N_S$ is the number of windings of the secondary winding $L_S$, and $V_R$ is the voltage across the rectifier circuit 30. The voltage $V_R$ across the rectifier circuit 30 is dependent on a current level of a current is through the secondary winding $L_S$ (secondary current). This current is decreases over the demagnetizing period $T_{DEMAG}$, so that the reflected voltage $V_{REFLECT}$ decreases and, at the end of the demagnetizing period $T_{DEMAG}$, reaches $N_P/N_S \cdot V_{OUT}$.

In the so-called quasi-resonant (QR) mode, there is a delay time between a time $t_3$ when the transformer 20 has been completely demagnetized and a time $t_4$ when a next drive cycle starts, that is, when the electronic switch $T_1$ is again switched on. In this time period, the load path voltage $V_{DS}$ oscillates. This is due to a parasitic resonant circuit that includes the primary winding $L_P$ and a parasitic capacitance of the electronic switch $T_1$. Such parasitic capacitance may be represented by a capacitor $C_{DS}$ (see Fig. 1) connected in parallel with the load path of the electronic switch $T_1$. In the QR mode, the control circuit 10 switches on the electronic switch 1 when the load path voltage $V_{DS}$ reaches a minimum $V_{DSmin1}$ after the transformer 20 has been demagnetized. However, the voltage level of the minimum voltage $V_{DSmin1}$ may be relatively high so that relatively high switching losses may occur. These switching losses include, for example, losses in connection with discharging the parasitic capacitance of the electronic switch $T_1$. These losses are the higher, the higher the voltage level of the voltage $V_{DS}$ is at the time $t_1$ of switching on the electronic switch $T_1$. Furthermore, the switching frequency in the quasi-resonant mode varies and, inter alia, is dependent on the on-period $T_{ON1}$. However, there are applications where such variation of the switching frequency is undesirable and where it is desired to operate the flyback converter at a predefined frequency. This predefined frequency may be fixed or may be dependent on a power consumption of the load Z.

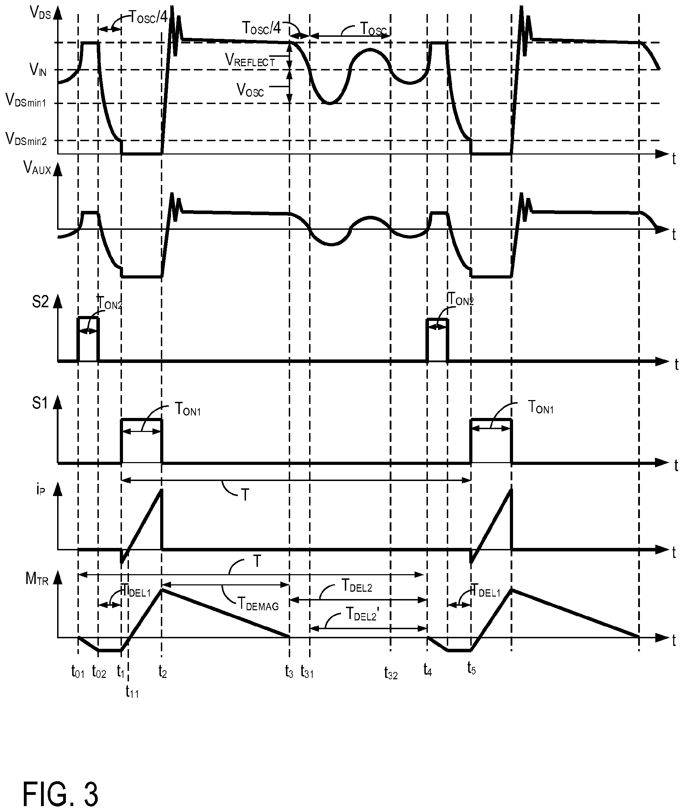

Fig. 3 shows timing diagrams of a method that provides for switching the electronic switch 1 at a predefined frequency and offers low switching losses. Fig. 3 shows timing diagrams of the load path voltage $V_{DS}$, the auxiliary voltage $V_{AUX}$, the drive signal $S_1$ of the electronic switch $T_1$, the load current ip of the electronic switch $T_1$, and the magnetization $M_{TR}$ of the transformer 20. The magnetization represents the magnetic flux in a core (not shown) of the transformer 20 and the magnetic flux density, respectively

In the example illustrated in Fig. 3, the transformer 20 is pre-magnetized for a pre-magnetizing period $T_{ON2}$ in each drive cycle (see, Fig. 3, drive signal S2) prior to switching on the electronic switch $T_1$ for the on-period $T_{ON1}$ (see, Fig. 3, drive signal S1). After pre-magnetizing the transformer 20, it is waited for a first delay time $T_{DEL1}$ before again switching on the electronic switch $T_1$. Pre-magnetizing the transformer 20 may include switching on a further electronic switch different from the electronic switch $T_1$. Examples of such further electronic switch are explained in greater detail herein below.

In the following, the electronic switch $T_1$ connected in series with the primary winding $L_P$ will be referred to as first electronic switch, and the further electronic switch used to pre-magnetize the transformer 20 will be referred to as second electronic switch. A drive signal S2 for driving this second electronic switch is also shown in Fig. 3 (see Fig. 3, third timing diagram from the top). According to the example of Fig. 3, a high-level represents an on-level that switches on the second electronic switch to pre-magnetize the transformer 20, and a low-level represents an off-level that switches off the second switch. Pre-magnetizing the transformer 20 includes magnetizing the transformer 20 such that, immediately after switching on the first electronic switch $T_1$, the primary current $i_P$ is negative (the direction of a positive primary current is indicated by an arrow shown in Fig, 1). The primary current $i_P$ remains negative until the transformer 20 is demagnetized (i.e. the pre-magnetization is compensated). Consequently, the magnetization $M_{TR}$ also changes its polarity during the on-period $T_{ON1}$ (see Fig. 3, sixth timing diagram). In Fig. 3, $t_{11}$ denotes the time instant, when the magnetization $M_{TR}$ is zero and changes its polarity. In the following, the magnetization (magnetic flux) $M_{TR}$ obtained in the pre-magnetizing period $T_{ON2}$ will be referred to as negative magnetization, and the magnetization after time $t_{11}$ will be referred to as positive magnetization.

Negatively pre-magnetizing the transformer 20 includes magnetically storing energy in the transformer 20. After the pre-magnetizing period $T_{ON2}$, that is, during the first delay time $T_{DEL1}$ (between the pre-magnetizing period $T_{ON2}$ and the on-period $T_{ON1}$), the energy stored in the transformer 20 and in the parasitic capacitance $C_{DS}$ of the electronic switch $T_1$ (cf. Fig. 1) cause an oscillation of the voltage $V_{DS}$ of the electronic switch $T_1$ (see Fig. 3, first timing diagram). By virtue of the transformer 20 being negatively magnetized, the amplitude of this oscillation is higher than the amplitude of the oscillation at the end of the demagnetizing period $T_{DEMAG}$ explained before with reference to Fig. 2. Thus, a voltage minimum $V_{DSmin2}$, which the voltage $V_{DS}$ reaches during the first delay time $T_{DEL1}$, is lower than the minimum $V_{DSmin1}$, which the voltage $V_{DS}$ reaches after the end of the demagnetizing period $T_{DEMAG}$. According to one embodiment, the first delay time $T_{DEL1}$ is chosen such that the first electronic switch $T_1$ switches on when the load path voltage $V_{DS}$ reaches the minimum $V_{DSmin2}$. This first delay time $T_{DEL1}$ is controlled by the control circuit 10.

At the beginning of the on-period $T_{ON1}$, the energy stored in the transformer 20 during the pre-magnetizing period $T_{ON2}$ is transferred to the input and the input capacitor $C_{IN}$, respectively. The time period in which this energy is transferred to the input is represented by the time period, in which the primary current $i_P$ is negative (see Fig. 3, fifth timing diagram). The transformer 20 is demagnetized when the primary current $i_P$ reaches zero (and the magnetization $M_{TR}$ reaches zero) at time instant $t_{11}$. After time instant $t_{11}$, the transformer 20 is positively magnetized until the first electronic switch $T_1$ switches off at time $t_2$. After the on-period $T_{ON1}$, during the demagnetizing period $T_{DEMAG}$, the energy stored in the transformer 20 is transferred to the secondary winding $L_S$, the rectifier circuit 30 and the load, as explained before with reference to Figs 1 and 2.

When operating a flyback-converter as shown in Fig. 3, switching losses are lower than in the QR-mode (cf. Fig. 2) as the first electronic switch $T_1$ switches on at a lower level of the voltage $V_{DS}$, namely at $V_{DSmin2}$ as opposed to $V_{DSmin1}$ in the QR-mode. Pre-magnetizing the transformer 20 is not associated with significant losses, as the energy used to pre-magnetize the transformer 20 is fed back to the input and thus buffered by the input capacitor $C_{IN}$. The voltage level $V_{DSmin2}$ is, inter alia, dependent on the pre-magnetizing period $T_{ON2}$, wherein the voltage level $V_{DSmin2}$ decreases as the pre-magnetizing period $T_{ON2}$ increases. According to one embodiment, the demagnetizing period $T_{ON2}$ is adjusted such that the voltage level of the second minimum $V_{DSmin2}$ is higher than zero. The electronic switch $T_1$ may have a parasitic capacitance $C_{DS}$ (cf. Fig. 1) that increases as the load path voltage $V_{DS}$ decreases. Thus, the energy to be stored in the transformer 20 in the pre-magnetizing period $T_{ON2}$, which (the energy) is required to discharge the parasitic capacitance during the first delay time $T_{DEL1}$, increases disproportionally the lower the desired voltage level $V_{DSmin2}$ is. According to one embodiment, the demagnetizing period $T_{ON2}$ is set such that the voltage level $V_{DSmin2}$ is between 5 and 50 volts.

In each drive cycle, the pre-magnetizing period $T_{ON2}$ can start any time after the demagnetizing period $T_{DEMAG}$. That is, there is no need to begin the pre-magnetizing period $T_{ON2}$ at a specific phasing of the oscillation of the voltage $V_{DS}$ occurring after the demagnetizing period $T_{DEMAG}$. Thus, the transformer 20 can be pre-magnetized at a predefined (fixed) frequency. That is, a time period T between the beginning of the pre-magnetizing period $T_{ON2}$ in one drive cycle and the beginning of the pre-magnetizing period $T_{ON2}$ in a successive drive cycle can be constant. If, for example, the pre-magnetizing period $T_{ON2}$ is substantially the same in each drive cycle and the first delay time $T_{DEL1}$ is substantially the same in each drive cycle, then the switching frequency of the first electronic switch $T_1$ equals the predefined (fixed) frequency $f=1/T$ at which the transformer is pre-magnetized. Thus, the concept for operating a flyback-converter illustrated in Fig. 3 may provide for a fixed frequency resonant operation of the electronic switch $T_1$ in the flyback converter. "Fixed frequency resonant operation" means that the switching frequency is substantially constant during operation of the flyback converter independent of a power consumption of the load while the advantages of quasi-resonant operation can be maintained. According to another embodiment, the controller 10 is configured to vary the switching frequency based on a power consumption of the load connected to the flyback converter, wherein the switching frequency may decrease as the power consumption decreases. The power consumption of the load is represented by the feedback signal $S_{FB}$.

The on-period $T_{ON}$ of the first electronic switch $T_1$ can be controlled in a conventional way dependent on the feedback signal $S_{FB}$ and, therefore, dependent on a power consumption of the load connected to the output of the flyback converter. When the power consumption of the load increases, the on-period $T_{ON1}$ becomes longer. Consequently, the demagnetizing period $T_{DEMAG}$ becomes longer, and the second delay time $T_{DEL2}$ becomes shorter (see Fig. 3, sixth timing diagram). Conversely, if the power consumption of the load decreases, the on-period $T_{ON1}$ becomes shorter. Consequently, the demagnetizing period $T_{DEMAG}$ becomes shorter, and the second delay time $T_{DEL2}$ becomes longer.

In Figure 3, Tosc denotes the period of the parasitic oscillation of the voltage $V_{DS}$ occurring after the demagnetizing period $T_{DEMAG}$. This period Tosc is substantially equal to the period of the parasitic oscillation during the first delay time $T_{DEL1}$ that causes the voltage $V_{DS}$ to decrease. The first delay time $T_{DEL1}$ may be substantially one quarter of the oscillation period, that is, Tosc/4 (see Fig. 3, first and sixth diagram). This oscillation period Tosc is dependent on a voltage level of the input voltage $V_{IN}$. Thus, according to one embodiment, the first delay time $T_{DEL1}$ is adjusted dependent on the voltage level of the input voltage $V_{IN}$. The voltage level of the input voltage $V_{IN}$ is usually constant during operation of the flyback converter or changes only slowly. Therefore, the voltage level can be assumed to be substantially constant over a plurality of subsequent drive cycles, and adjusting the first delay time $T_{DEL1}$ dependent on the input voltage $V_{IN}$ does not affect the operation of the first electronic switch $T_1$ at the mentioned predefined frequency $f=1/T$. The same applies to adjusting the pre-magnetizing period $T_{ON2}$ dependent on the input voltage $V_{IN}$. According to one embodiment, the pre-magnetizing period $T_{ON2}$ is adjusted such that it becomes longer as the voltage level of the input voltage $V_{IN}$ increases.

The oscillation period Tosc can be measured during the second delay time $T_{DEL2}$ of one drive cycle and, based on this measurement, the first delay time $T_{DEL1}$ can be adjusted in one or more subsequent drive cycles. As, referring to the above, the oscillation period $T_{OSC}$ is dependent on the voltage level of the input voltage $V_{IN}$ and this voltage level is either constant or changes only slowly, it may be sufficient to measure the oscillation period $T_{OSC}$ not in every drive cycle (but merely from time to time).

The oscillation period $T_{OSC}$ can be measured using on the auxiliary voltage $V_{AUX}$ (see Fig. 1). Measuring the oscillation period $T_{OSC}$ may include detecting those time instants when the auxiliary voltage $V_{AUX}$ becomes zero and measuring a time period between a time instant $t_{31}$, at which the auxiliary voltage $V_{AUX}$ reaches zero for the first time, and a time instant $t_{32}$, at which the auxiliary voltage $V_{AUX}$ reaches zero for the third time. According to another embodiment, a time difference between two subsequent time instants, at which the auxiliary voltage $V_{AUX}$ reaches zero is measured. This time corresponds to half of the oscillation period $T_{OSC}$, that is, $T_{OSC}/2$. Based on this, the oscillation period $T_{OSC}$ can be determined.

The concept illustrated in Fig. 3 may be implemented in different ways. According to one embodiment, the pre-magnetizing periods $T_{ON2}$ start in accordance with a predefined frequency $f=1/T$. Referring to the above, the predefined frequency may be fixed or may be dependent on the power consumption of the load. A clock signal $S_{CLK}$ may be used to define the beginning of these pre-magnetizing periods $T_{ON2}$. In Fig. 3, $t_{01}$ and $t_4$ denote those time instants, at which the pre-magnetizing periods begin. The pre-magnetizing period $T_{ON2}$, the first delay time $T_{DEL1}$ and the on-period $T_{ON1}$ may be adjusted as explained above. The demagnetizing period $T_{DEMAG}$ and the second delay time $T_{DEL2}$ are dependent on the on-period $T_{ON1}$ and adjust automatically, as

$$T_{DEL2} + T_{DEMAG} = T - (T_{ON1} + T_{DEL1} + T_{ON2}). \tag{3}$$

According to another embodiment, the on-periods $T_{ON1}$ start in accordance with a predefined frequency $f=1/T$, which may be fixed or dependent on a power consumption of the load. That is, the control circuit 10 switches on the first electronic switch $T_1$ at a predefined frequency. A clock signal $S_{CLK}$ may be used to define those times when the on-periods $T_{ON1}$ begin, that is, when the electronic switch $T_1$ switches on. In Fig. 3, $t_1$ and $t_5$ denote those times when the on-periods $T_{ON1}$ begin. Again, the on-periods $T_{ON1}$, the pre-magnetizing periods $T_{ON2}$ and the first delay time $T_{DEL1}$ may be adjusted as explained above. Based on these parameters and based on the period T of one drive cycle, the times when the pre-magnetizing periods $T_{ON2}$ start can be calculated. In the example of Fig. 3, a time period between the beginning of one on-period $T_{ON1}$ and the beginning of the next pre-magnetizing period $T_{ON2}$ equals the on-period $T_{ON1}$ plus the demagnetizing period $T_{DEMAG}$ plus the second delay time $T_{DEL2}$ ($T_{ON1}+T_{DEMAG}+T_{DEL2}$). This time period can be easily calculated from the period T of one drive cycle, the pre-magnetizing period $T_{ON2}$ and the first delay time $T_{DEL1}$ as follows.

$$T_{ON1} + T_{DEMAG} + T_{DEL2} = T - (T_{ON2} + T_{DEL1}). \tag{4}$$

According to yet another embodiment, the period T of one drive cycle and the switching frequency (which is 1/T), respectively, is adjusted by adjusting (calculating) the second delay time $T_{DEL2}$. Referring to Figure 3, one drive cycle period T is given by

$$T = T_{ON1} + T_{DEMAG} + T_{DEL2} + T_{ON2} + T_{DEL1}, \tag{5a}$$

whereas the on-period $T_{ON1}$, the pre-magnetizing period $T_{ON2}$, and the first delay time $T_{DEL1}$ may be adjusted (calculated) as mentioned above. The demagnetizing period $T_{DEMAG}$ adjusts automatically dependent on the on-period $T_{ON1}$. Thus, given that the parameters $T_{ON1}$, $T_{ON2}$ and $T_{DEL1}$ (by the controller 10) are adjusted and $T_{DEMAG}$ adjusts automatically a desired period T of one drive cycle can be adjusted by adjusting the second delay time $T_{DEL2}$. In this case, there is no clock signal required that defines the beginning of the on-periods $T_{ON1}$ or the pre-magnetizing periods $T_{ON2}$, respectively (i.e. the clock signal is optional). Based on equation (5a), the second delay time is $T_{DEL2}$ can be calculated as follows:

$$T_{DEL2} = T - (T_{ON1} + T_{DEMAG} + T_{ON2} + T_{DEL1}). \tag{5b}$$

The desired drive cycle period T can be fixed or can be dependent on a power consumption of the load. In the latter case, the drive cycle period T may increase as the power consumption decreases, so that the switching frequency decreases as the power consumption decreases.

Adjusting the second delay time $T_{DEL2}$ and, therefore, adjusting the drive cycle period T (the switching frequency) based on equations (5a) and (5b) requires that the demagnetizing period $T_{DEMAG}$ be measured. Measuring the demagnetizing period may include measuring the time period between the end of the on-period $T_{ON1}$ at time $t_2$ and the time $t_3$ when the transformer has been demagnetized. The time $t_2$ is the time, when the drive signal S1 switches to an off-level. Furthermore, the time $t_2$ is given by the time when the pre-magnetizing period $T_{ON2}$ begins plus the pre-magnetizing period $T_{ON2}$, the first delay time $T_{DEL1}$, and the on-period $T_{ON1}$. The latter are adjusted (calculated) as explained above. One drive cycle begins at the beginning of the pre-magnetizing period $T_{ON2}$ as defined by the second delay time $T_{DEL2}$.

According to one embodiment, the drive cycle period T is adjusted by adjusting a third delay time $T_{DEL2}'$. Referring to Fig. 3, this third delay time $T_{DEL2}'$ equals the second delay time $T_{DEL2}$ minus one quarter of the oscillation period $T_{OSC}$. That is,

$$T_{DEL2}' = T_{DEL2} - T_{OSC}/4. \tag{6}$$

Based on equations (5b) and (6), the third delay time $T_{DEL2}'$ can be calculated as follows:

$$T_{DEL2}' = T - (T_{ON1} + T_{DEMAG} + T_{OSC}/4 + T_{ON2} + T_{DEL1}). \tag{7}$$

In other words, the drive cycle period T can be adjusted by adjusting the third delay time $T_{DEL2}'$, given that $T_{ON1}$, $T_{ON2}$ and $T_{DEL1}$ are adjusted as explained above and $T_{DEMAG}$ and $T_{OSC}/4$ adjust automatically. Adjusting the second delay time $T_{DEL2}$ and, therefore, adjusting the drive cycle period T (the switching frequency) based on equation (7) requires that the demagnetizing period $T_{DEMAG}$ plus one quarter of one oscillation period $T_{OSC}$ be measured. Measuring this may include detecting the end of the on-period $T_{ON1}$ at time $t_2$ and detecting when the auxiliary voltage $V_{AUX}$ crosses zero for the first time after the end of the on-period $T_{ON1}$. In Fig. 3, $t_{31}$ denotes the time when auxiliary voltage $V_{AUX}$ crosses zero for the first time after the end of the on-period $T_{ON1}$.

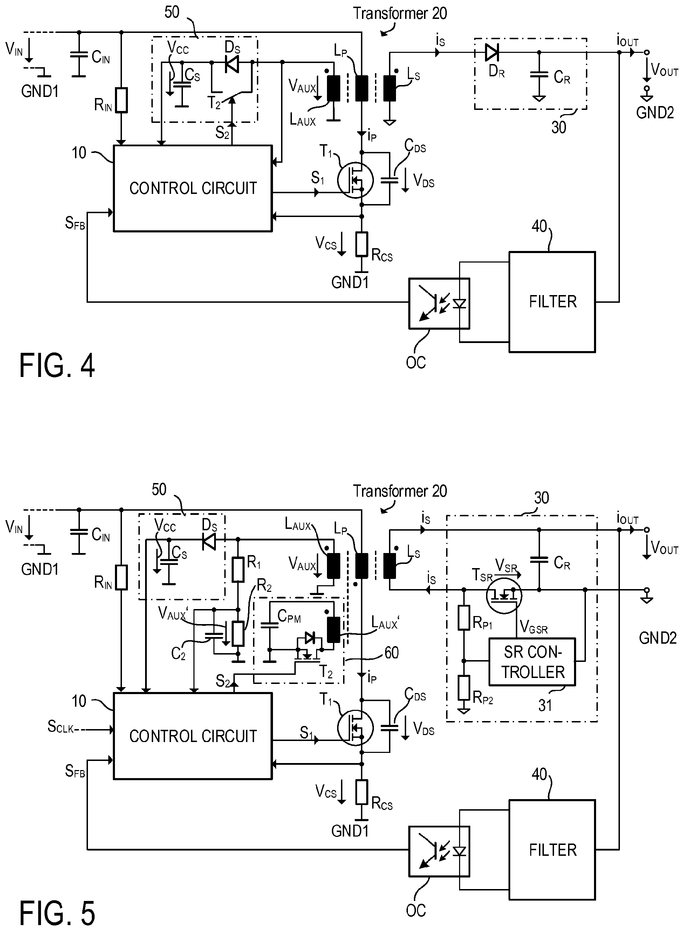

Fig. 4 illustrates an example of a flyback converter using the constant frequency switching concept as discussed above with reference to Fig. 3. The flyback converter shown in Fig. 4 is basically the same as the flyback converter of Fig. 1. However, it has an additionally supply circuit 50 coupled to the auxiliary winding $L_{AUX}$ and configured to generate a supply voltage $V_{CC}$ for the control circuit 10. The supply circuit 50 includes a series circuit with a rectifier element $D_S$

such as a diode, and a capacitor $C_S$ connected in parallel with the auxiliary winding $L_{AUX}$. In the present example, the second electronic switch mentioned above in the discussion of Fig. 3, is the electronic switch $T_2$ that is connected in parallel with the diode $D_S$. The supply voltage $V_{CC}$ is available across the capacitor $C_S$. The second electronic switch $T_2$ receives a second drive signal $S_2$, which is provided by the control circuit 10. As explained above, this drive signal S2 defines the pre-magnetizing period of the transformer 20 (see Fig. 3).

One way of operation of the flyback converter of Fig. 4 has been explained above with reference to the timing diagrams included in Figure 3. During the demagnetizing period $T_{DEMAG}$, energy is not only transferred to the secondary winding $L_S$, the rectifier circuit 30 and the load, but also to the capacitor $C_S$ of the supply circuit 50 via the auxiliary winding $L_{AUX}$ and the diode $D_S$. During the pre-magnetizing period $T_{ON2}$, the control circuit 10 closes the second electronic switch $T_2$. This causes the transformer 20 to be pre-magnetized, whereas the energy stored in the transformer 20 during the pre-magnetizing period $T_{ON2}$ is taken from the capacitor $C_S$ of the supply circuit 50.

Optionally, the control circuit 10 may receive the input voltage $V_{IN}$ via a resistor $R_{IN}$. The input voltage $V_{IN}$ received by the control circuit 10 may be used to supply the control circuit 10 before the electronic switch $T_1$ is switched on for the first time, that is, before start-up of flyback converter. Additionally, the control circuit 10 may use the information on the level of the input voltage $V_{IN}$ to control the demagnetizing period $T_{ON2}$ and the first delay time $T_{DEL1}$, respectively. Alternatively, the first delay time $T_{DEL1}$ may be adjusted by measuring the oscillation period $T_{OSC}$ as discussed further above.

The control circuit 10 can be implemented using dedicated analog circuitry or using hardware and software. According to one embodiment, the control circuit includes a microprocessor or microcontroller, on which a software configured to perform the method explained with reference to Fig. 3 is executed.

The control circuit 10 may operate in the current mode (CM). In this case, the control circuit 10 receives a voltage $V_{CS}$ from a current sense resistor $R_S$ that is connected in series with the first electronic switch $T_1$. This voltage $V_{CS}$ is proportional to the primary current $i_P$. In this embodiment, the control circuit 10 is configured to adjust the on-period $T_{ON1}$ based on the voltage $V_{CS}$ and the feedback signal $S_{FB}$ in order to regulate the output voltage. This type of regulation is often referred to as "current-mode control". According to another embodiment, the control circuit 10 is configured to calculate the on-period $T_{ON1}$ only based on the feedback signal $S_{FB}$.

As discussed above, the pre-magnetizing of the transformer 20 during the pre-magnetizing period $T_{ON2}$ of each drive cycle (cf. Fig. 3) is triggered by the electronic switch T2 included in the supply circuit 50 in the example of Fig. 4. Thus, the supply circuit 50 has two functions/purposes, namely, first, to generate the supply voltage $V_{CC}$ for the control circuit 10 and, second, to pre-magnetize the transformer 20 using the auxiliary winding $L_{AUX}$. In the example of Fig. 5, which is very similar to the previous example of Fig. 4, these two functions have been separated. Accordingly, in the example of Fig. 5, the supply circuit 50 is only configured to generate the supply voltage $V_{CC}$ for the control circuit 10, whereas the function of pre-magnetizing is implemented by the pre-magnetizing circuit 60 coupled to a further auxiliary winding $L_{AUX}$'. Accordingly, the supply circuit 50 basically includes the diode $D_S$ and the capacitor $C_S$, which are coupled in series, wherein this series circuit is connected in parallel to the auxiliary winding $L_{AUX}$. The supply voltage $V_{CC}$ is the voltage across the capacitor $C_S$. The pre-magnetizing circuit 60 includes a capacitor $C_{PM}$ and the second electronic switch $T_2$, which is implemented as a MOS-Transistor in the present example. The electronic switch $T_2$ is coupled between the capacitor $C_{PM}$ and the further auxiliary winding $L_{AUX}$' so that — when the electronic switch $T_2$ is closed — capacitor $C_{PM}$ and the further auxiliary winding $L_{AUX}$' are connected in parallel. When the electronic switch $T_2$ is open, then the intrinsic reverse diode of the MOSFET $T_2$ allows charging of the capacitor $C_{PM}$ in similar manner as capacitor $C_S$ of the supply circuit is charged.

The example of Fig. 5 further includes the voltage divider composed of resistors $R_1$ and $R_2$ connected in parallel to the auxiliary winding $L_{AUX}$. Different from the previous example of Fig. 4, the control circuit receives the scaled voltage $V_{AUX}$' ≈ $V_{AUX} \cdot R_2/(R_1+R_2)$. Optionally, a small capacitor $C_2$ may be connected in parallel to resistor $R_2$.

Apart from the aspects described above (separation of pre-magnetizing circuit 60 from the supply circuit 50, voltage divider $R_1$, $R_2$) the primary side of the flyback converter of Fig. 4 is substantially the same as in the previous example of Fig. 4 and reference is made to the description above. On the secondary side, the rectifier circuit 30 is implemented differently from the previous example. While, in the example of Fig. 4, a simple diode is used as rectifying element (see Fig. 4, diode $D_R$), the rectifying circuit 30 of Fig. 5 includes a so-called synchronous rectifier, which is basically composed of a transistor $T_{SR}$ (e.g. a MOSFET) and a controller circuit 31. Synchronous rectifiers are used to replace normal silicon diodes, as the MOSFET $T_{SR}$ — when switched on — causes significant lower forward voltage as compared with a silicon diode and thus improves power dissipation. However, synchronous rectifiers need a controller circuit (Fig. 5, controller circuit 31 labelled "SR controller") that switches the MOSFET on and off at the correct time instances. Controller circuits for synchronous rectifiers are as such known and available from various manufacturers (e.g. Synchronous Rectifier Controller NCP4304 from ON Semiconductor). The controller circuit 31 may be configured to monitor the voltage $V_{SR}$ across the load current path of the transistor $T_{SR}$ (i.e. the drain-source voltage in case of a MOSFET) and to switch on the MOSFET $T_{SR}$ when the voltage $V_{SR}$ drops to zero. In other words, the MOSFET $T_{SR}$ is switched on, when a falling edge in the voltage $V_{SR}$ is detected The controller circuit 31 switches the MOSFET off again shortly before the voltage $V_{SR}$ becomes positive.

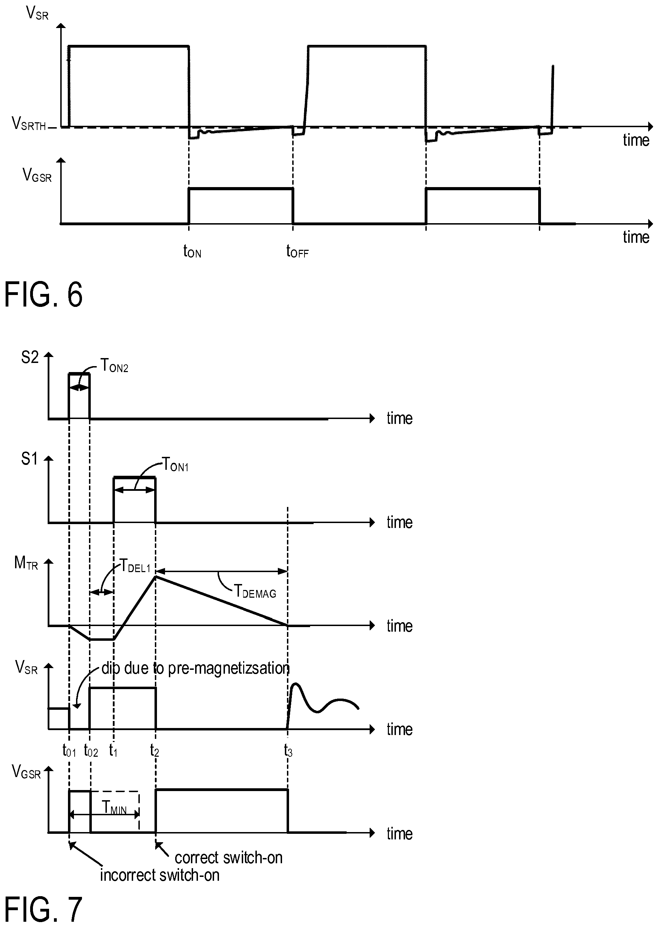

One example of how the SR controller circuit 31 switches the MOSFET $T_{SR}$ is illustrated by the timing diagrams included in Fig. 6. The top diagram illustrates one exemplary waveform of the voltage $V_{SR}$ across the load current path of the MOSFET $T_{SR}$, whereas the bottom diagram illustrates the corresponding gate signal $V_{GSR}$ generated by the SR controller circuit 31 and supplied to the gate of the MOSFET $T_{SR}$. As illustrated in Fig. 6, a switch-on of the MOSFET $T_{SR}$ is triggered by the voltage $V_{SR}$ falling below the threshold level $V_{SRTH}$ (time instants $t_{ON}$ in Fig 6). Various concepts may be used for detecting the time instant $t_{OFF}$, at which the MOSFET $T_{SR}$ is again switched off. It is noted that the threshold level $V_{SRTH}$ may be close to zero (positive or negative) or zero. Different thresholds may be used to detect the switch-on time and the switch-off time of the MOSFET $T_{SR}$. For example, the threshold for determining the switch-on-time may be negative, e.g. -0.2V, whereas the threshold for determining the switch-off time may be zero volts.

Again referring to Fig. 5, it is clear that the voltage $V_{SR}$ across the load current path of the transistor $T_{SR}$ equals the difference between the output voltage $V_{OUT}$ and the voltage drop $V_{LS}$ across the secondary winding $L_S$. Assuming that the output voltage is substantially constant or changes only slowly, the falling edge in the voltage $V_{SR}$ (see, Fig. 6, top diagram) is also present in the voltage $V_{LS}$ across the secondary winding Ls.

When operating in conventional QR mode (see, e.g. Fig. 2), in which the pre-magnetizing circuit 60 is not needed, the circuit shown in Fig. 5 and particularly the rectifier circuit 30 (synchronous rectifier) operates as discussed above. However, a problem may occur when operating in fixed frequency resonant mode, i.e. during fixed frequency operation as discussed above with reference to Fig. 3. The negative pre-magnetizing of the transformer 20 gives rise to a negative magnetization gradient (see Fig. 3, magnetization $M_{TS}$ between toi and $t_{02}$). This negative magnetization gradient causes the voltage $V_{LS}$ to dip during the pre-magnetization period $T_{ON2}$ in a similar manner as during the demagnetizing period $T_{DEMAG}$, in which the magnetization gradient is also negative. The mentioned dip of the voltage $V_{LS}$ during the pre-magnetization period $T_{ON2}$ may trigger an undesired switch-on of the electronic switch $T_{SR}$ included in the rectifier circuit 30. Such an undesired switch-on may result in an undesired short-circuit (shoot-through) that can destroy the MOSFET $T_{SR}$ of the synchronous rectifier. Furthermore, dependent on the implementation, an early switch-on of the MOSFET $T_{SR}$ may also damage or destroy the first electronic switch $T_1$. Usually, the SR controller 31 is configured to switch on the MOSFET $T_{SR}$ and to keep it in an on-state for a minimum switch-on time in order to avoid an undesired toggling. When, during this minimum switch-on time the first electronic switch $T_1$ is also switched on, then a shoot-through (short circuit) occurs that can potentially destroy both, the MOSFET $T_{SR}$ and the first electronic switch $T_1$.

The above-mentioned undesired switch-on of the transistor $T_{SR}$ by the synchronous rectifier controller circuit 31 is also illustrated by the timing diagrams included in Fig. 7 . The first three timing diagrams (from the top) in Fig. 7 are also included in Fig. 3 (though only one cycle is shown). These diagrams illustrate exemplary waveforms of the drive signals S1 and S2 for the first electronic switch $T_1$ and, respectively, the second electronic switch T2. The fourth timing diagram illustrates a corresponding waveform of the voltage $V_{SR}$ across the transistor $T_{SR}$ of the synchronous rectifier 30, and the fifth diagram is the respective drive signal (gate signal) $V_{GSR}$ generated by the synchronous rectifier control circuit 31. As can be seen in Fig. 7, the pre-magnetizing during the pre-magnetizing period $T_{ON2}$ causes a dip in the voltage $V_{SR}$ the respective falling edge is detected by the synchronous rectifier controller circuit 31, which thus generates an incorrect high-pulse in the drive signal $V_{GSR}$ (gate signal) for transistor $T_{SR}$. As mentioned, may SR controllers are designed (or need to be designed) such that the MOSFET $T_{SR}$ (i.e. the SR switch) is kept in an on-state for a minimum time period $T_{MIN}$ in order to avoid undesired toggling. Situations may occur, in which this minimum time period $T_{MIN}$ overlaps with the on-period $T_{ON1}$ of the first electronic switch $T_1$. In this case, when both switches, $T_1$ and $T_{SR}$, are on, the transformer is effectively shortcircuited and both switches, $T_1$ and $T_{SR}$, may be damaged or destroyed. In the situation illustrated in Fig 7, the dashed line illustrates the on-period $T_{MIN}$ and the short circuit occurs at time $t_1$ when the first electronic switch $T_1$ switches on.

As mentioned above, the voltage $V_{SR}$ across the load current path of the transistor $T_{SR}$ equals the difference between the output voltage $V_{OUT}$ and the voltage $V_{LS}$ across the secondary winding $L_S$ ($V_{SR} = V_{OUT} - V_{LS}$). During the pre-magnetization period $T_{ON2}$ the voltage $V_{LS}$ across the secondary winding $L_S$ is substantially proportional to the voltage $V_{PM}$ across the further auxiliary winding $L_{AUX}'$. Therefore,

$$V_{SR} = V_{OUT} - V_{PM} \cdot N_S/N_{AUX}', \tag{8}$$

wherein $N_S$ denotes the number of windings of the secondary winding $L_S$ and $N_{AUX}'$ denotes the number of windings of the further auxiliary winding $L_{AUX}'$.

As can be seen from equation (8) the voltage swing causing the mentioned dip in the voltage signal $V_{SR}$ can be reduced by reducing the voltage $V_{PM}$ applied to the further auxiliary winding $L_{AUX}'$ during the pre-magnetization period $T_{ON2}$. To avoid the undesired early switch-on of the transistor $T_{SR}$ included in the synchronous rectifier circuit 30, the embodiments described below include modified pre-magnetization circuits 60. These are configured to apply, during the re-magnetization period $T_{ON2}$, a voltage $V_{PM}$ to the further auxiliary winding $L_{AUX}'$ which is so low that the resulting dip in the voltage $V_{SR}$ across the transistor $T_{SR}$ cannot trigger a switch-on of the transistor $T_{SR}$.

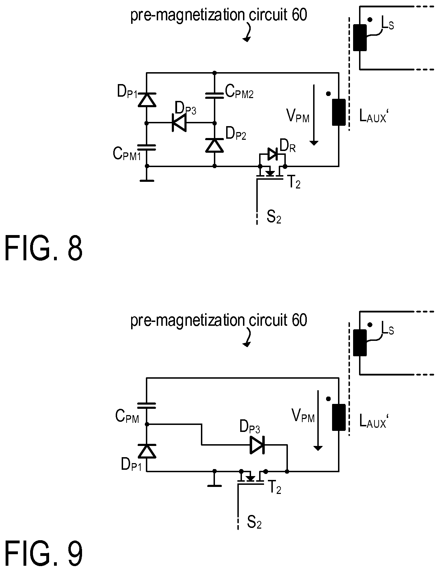

In the embodiment of Fig. 8, the pre-magnetization circuits 60 includes not only a single capacitor (as shown in the example of Fig. 5), but a more complex capacitive circuit including a first capacitor $C_{PM1}$, a second capacitor $C_{PM2}$, and three diodes $D_{P1}$, $D_{P2}$, and $D_{P3}$. The capacitors $C_{PM1}$, $C_{PM2}$ are coupled by the diodes $D_{P1}$, $D_{P2}$, and $D_{P3}$ such that — when the capacitive circuit is charged via the transistor's intrinsic reverse diode $D_R$ — capacitors $C_{PM1}$, $C_{PM2}$ are effectively connected in series (via diode $D_{P3}$). Accordingly, the capacitors $C_{PM1}$, $C_{PM2}$ form a capacitive voltage divider, wherein the voltage across each capacitor is approximately $V_{PM}/2$ (when neglecting the voltage drop across the diodes). The diodes $D_{P1}$, $D_{P2}$ are reverse biased and thus blocking while the capacitors $C_{PM1}$, $C_{PM2}$ are charged. During the pre-magnetization period $T_{ON2}$ the transistor $T_2$ is switched on and, in this situation, the diode $D_{P3}$ is reverse biased and blocking and, therefore, the capacitors $C_{PM1}$, $C_{PM2}$ are effectively connected in parallel. Accordingly, the voltage $V_{PM}/2$ is applied to the further auxiliary winding $L_{AUX}$' during the pre-magnetization period $T_{ON2}$, which is low enough to avoid an undesired early triggering of the synchronous rectifier.

In the embodiment of Fig. 9, the pre-magnetization circuit 60 includes the capacitor $C_{PM}$, which can be charged via diode $D_{P3}$ while the second electronic switch $T_2$ is switched off. Due to the voltage drop across diode $D_{P3}$ (forward voltage $D_F \approx 0{,}7V$) the capacitor is charged to a voltage equal to $V_{PM}-V_F$. During the pre-magnetization period $T_{ON2}$ the transistor $T_2$ is switched on and, in this situation, the diode $D_{P3}$ is reverse biased. Accordingly, the above-mentioned voltage $V_{PM}-V_F$ is applied to the further auxiliary winding $L_{AUX}$' via diode $D_{P1}$, which is effectively connected in series to the capacitor $C_{PM}$. As diode $D_{P1}$ causes another voltage drop of $V_F$ the further auxiliary winding "sees" a voltage level of $V_{PM}-2V_F$. If this level is not low enough to avoid (or reduce) the dip in the voltage $V_{SR}$ across the transistor $T_{SR}$ in the synchronous rectifier circuit 31, the diode $D_{P1}$ may be replaced by series circuit of two or more diodes.

In both embodiments (Fig. 8 and 9) the pre-magnetization circuits 60 includes a capacitive circuit, which is charged up to a maximum voltage level $V_{PM}$ (the second electronic switch $T_2$ is off while the capacitive circuit is charged). While discharging the energy stored in the capacitive circuit into the further auxiliary winding $L_{AUX}$' (i.e. during the pre-magnetization period $T_{ON2}$, see Fig. 3) the maximum voltage applied to the further auxiliary winding $L_{AUX}$' is, however, lower than the maximum voltage level $V_{PM}$ in the charging phase.

Although various embodiments have been illustrated and described with respect to one or more specific implementations, alterations and/or modifications may be made to the illustrated examples without departing from the scope of the appended claims. With particular regard to the various functions performed by the above described components or structures (units, assemblies, devices, circuits, systems, etc.), the terms (including a reference to a "means") used to describe such components are intended to correspond — unless otherwise indicated — to any component or structure that performs the specified function of the described component (e.g., that is functionally equivalent), even if it is not structurally equivalent to the disclosed structure that performs the function in the herein illustrated exemplary implementations of the present disclosure.

## Claims

1. A switching converter that comprises:

   a transformer comprising a primary winding ($L_P$), a secondary winding ($L_S$) and at least an auxiliary winding ($L_{AUX}$');
   a first electronic switch ($T_1$) coupled to the primary winding ($L_P$) and configured to switch a primary current ($i_P$) passing through the primary winding on and off in accordance with a first drive signal (S1);
   a synchronous rectifier circuit (30) coupled between the secondary winding ($L_S$) and an output node of the switching converter and including a transistor ($T_{SR}$) and a controller (31) configured to switch the transistor ($T_{SR}$) on and off;
   a pre-magnetization circuit (60) which comprises a capacitive circuit ($C_{PM}$, $D_{P1}$, $Dp_3$; $C_{PM1}$, $C_{PM2}$, $D_{P1}$, $D_{P2}$, $D_{P3}$) and a second electronic switch ($T_2$) that is connected between the auxiliary winding ($L_{AUX}$') and the capacitive circuit ($C_{PM}$, $D_{P1}$, $Dp_3$; $C_{PM1}$, $C_{PM2}$, $D_{P1}$, $D_{P2}$, $D_{P3}$); **characterised in that** the capacitive circuit is configured to apply a first voltage ($V_{PM}/2$, $V_{PM}-2V_F$) to the auxiliary winding ($L_{AUX}$') during a pre-magnetization period ($T_{ON2}$) when the second electronic switch ($T_2$) is closed and to be charged up to a second voltage ($V_{PM}$) when the second electronic switch ($T_2$) is open, the first voltage being lower than the second voltage, such that a switch-on of the transistor ($T_{SR}$) by the controller (31) is avoided in the pre-magnetization period ($T_{ON2}$).

2. The switching converter according to claim 1,
   wherein the capacitive circuit includes at least one capacitor ($C_{PM}$; $C_{PM1}$, $C_{PM2}$) which is coupled to the secondary winding via a diode ($DP_1$, $DP_2$), which causes a voltage drop ($V_F$) so that the first voltage ($V_{PM}/2$, $V_{PM}-2V_F$) applied to the auxiliary winding ($L_{AUX}$') during the pre-magnetization period ($T_{ON2}$) is lower than the second voltage ($V_{PM}$)

by at least the voltage drop ($V_F$).

3. The switching converter according to claim 1 or 2
wherein the capacitive circuit includes a first capacitor ($C_{PM1}$) and a first diode ($D_{P1}$) connected to the first capacitor ($C_{PM1}$) and further includes a second capacitor ($C_{PM2}$) and a second diode ($D_{P1}$) connected to the second capacitor ($C_{PM1}$), wherein the common circuit node between the first capacitor ($C_{PM1}$) and the first diode ($D_{P1}$) and the common circuit node between the second capacitor ($C_{PM2}$) and the second diode ($D_{P2}$) are connected by a third diode ($D_{P3}$).

4. The switching converter according to any of claims 1 to 3,

wherein the synchronous rectifier circuit (30) includes a transistor ($T_{SR}$) and an output capacitor ($C_{OUT}$) coupled to the secondary winding ($L_S$) via the transistor ($T_{SR}$), and
wherein the synchronous rectifier circuit (30) includes a controller circuit (31) configured to sense a voltage ($V_{SR}$) across a load current path of the transistor ($T_{SR}$) and to switch the transistor ($T_{SR}$) on when the voltage ($V_{SR}$) across the load current path of the transistor ($T_{SR}$) falls below a predefined threshold level ($V_{SRTH}$).

5. The switching converter according to any of claims 1 to 4 further comprising:
a control circuit (10) configured to generate the first drive signal ($S_1$) for the first electronic switch ($T_1$) and a second drive signal ($S_2$) for the second electronic switch ($T_2$), in each switching cycle, the first drive signal ($S_1$) causing the first electronic switch ($T_1$) to switch on for an on-period ($T_{ON1}$).

6. The switching converter according to claim 5,
wherein either the first drive signal ($S_1$) or the second drive signal ($S_2$) is synchronized with a clock signal.

7. The switching converter according to claim 5 or 6,
wherein during operation the auxiliary winding ($L_{AUX}'$) provides the second voltage ($V_{PM}$) to the capacitive circuit during a demagnetizing period ($T_{DEMAG}$) that directly follows the on-period ($T_{ON1}$).

8. The switching converter according to claim 7,
wherein, in each switching cycle, the second drive signal ($S_2$) causes the second electronic switch ($T_2$) to switch on for the pre-magnetization period ($T_{ON2}$), which occurs after the preceding demagnetizing period ($T_{DEMAG}$).

9. The switching converter according to any of claims 1 to 7, further comprising:

a further auxiliary winding ($L_{AUX}$) and
a supply circuit coupled (50) coupled to the further auxiliary winding ($L_{AUX}$) and configured to generate a supply voltage ($V_{CC}$) for a control circuit (10) of the switching converter.

10. The switching converter according to any of claims 1 to 9,
wherein the maximum level of the first voltage applied to the auxiliary winding ($L_{AUX}'$) during the pre-magnetization period ($T_{ON2}$) is lower than the maximum level of the second voltage ($V_{PM}$) during a charging phase, in which the capacitive circuit is charged.

11. A method for operating a switching converter that comprises:
a transformer comprising a primary winding ($L_P$), a secondary winding ($L_S$) and at least an auxiliary winding ($L_{AUX}'$);
a first electronic switch ($T_1$) coupled to the primary winding ($L_P$); a synchronous rectifier circuit (30) coupled between the secondary winding ($L_S$) and an output node of the switching converter and including a transistor ($T_{SR}$) and a controller (31) configured to switch the transistor ($T_{SR}$) on and off; and a pre-magnetization circuit (60) which comprises a capacitive circuit ($C_{PM}$, $D_{P1}$, $D_{P3}$; $C_{PM1}$, $C_{PM2}$, $D_{P1}$, $D_{P2}$, $D_{P3}$) and a second electronic switch ($T_2$) that is connected between the auxiliary winding ($L_{AUX}'$) and the capacitive circuit; the method comprising:

switching, using the first electronic switch ($T_1$), a primary current ($i_P$) passing through the primary winding on and off in accordance with a first drive signal ($S_1$);
closing the second electronic switch ($T_2$) during a pre-magnetization period ($T_{ON2}$) to apply a first voltage ($V_{PM}/2$, $V_{PM}-2V_F$), which is provided by the capacitive circuit, to the auxiliary winding ($L_{AUX}'$), and before closing the second electronic switch (T2)
charging the capacitive circuit up to a second voltage ($V_{PM}$) when the second electronic switch ($T_2$) is open, wherein the first voltage being lower than the second voltage such that a switch-on of the transistor ($T_{SR}$) by the controller (31) is avoided in the pre-magnetization period ($T_{ON2}$).

**12.** The method according to claim 11,
wherein the difference between the second voltage and the first voltage is at least partially caused by a voltage drop across a diode included in the capacitive circuit.

**13.** The method according to claim 11 or 12,
wherein the maximum level of the first voltage applied to the auxiliary winding ($L_{AUX}$') during the pre-magnetization period ($T_{ON2}$) is lower than the maximum level of the second voltage ($V_{PM}$) during a charging phase, in which the capacitive circuit is charged.

**Patentansprüche**

**1.** Schaltwandler, der Folgendes umfasst:

einen Transformator mit einer Primärwicklung ($L_P$), einer Sekundärwicklung ($L_S$) und mindestens einer Hilfswicklung ($L_{AUX}$');
einen ersten elektronischen Schalter ($T_1$), der mit der Primärwicklung ($L_P$) gekoppelt und dazu ausgelegt ist, einen durch die Primärwicklung fließenden Primärstrom ($i_P$) gemäß einem ersten Ansteuersignal (S1) ein- und auszuschalten;
eine Synchrongleichrichterschaltung (30), die zwischen der Sekundärwicklung ($L_S$) und einen Ausgangsknoten des Schaltwandlers gekoppelt ist und einen Transistor ($T_{SR}$) und eine Steuervorrichtung (31) enthält, der dazu ausgelegt ist, den Transistor ($T_{SR}$) ein- und auszuschalten;
eine Vormagnetisierungsschaltung (60), die eine kapazitive Schaltung ($C_{PM}$, $D_{P1}$, $D_{P3}$; $C_{PM1}$, $C_{PM2}$, $D_{P1}$, $D_{P2}$, $D_{P3}$) und einen zweiten elektronischen Schalter ($T_2$) umfasst, der zwischen der Hilfswicklung ($L_{AUX}$') und der kapazitiven Schaltung ($C_{PM}$, $D_{P1}$, $D_{P3}$; $C_{PM1}$, $C_{PM2}$, $D_{P1}$, $D_{P2}$, $D_{P3}$) angeschlossen ist;
**dadurch gekennzeichnet, dass**
die kapazitive Schaltung dazu ausgelegt ist, während einer Vormagnetisierungsperiode ($T_{ON2}$) eine erste Spannung ($V_{PM}$/2, $V_{PM}$-2$V_F$) an die Hilfswicklung ($L_{AUX}$') anzulegen, wenn der zweite elektronische Schalter ($T_2$) geschlossen ist, und auf eine zweite Spannung ($V_{PM}$) aufgeladen zu werden, wenn der zweite elektronische Schalter ($T_2$) geöffnet ist, wobei die erste Spannung niedriger als die zweite Spannung ist, sodass ein Einschalten des Transistors ($T_{SR}$) durch die Steuervorrichtung (31) in der Vormagnetisierungsperiode ($T_{ON2}$) vermieden wird.

**2.** Schaltwandler gemäß Anspruch 1,
wobei die kapazitive Schaltung mindestens einen Kondensator ($C_{PM}$; $C_{PM1}$, $C_{PM2}$) enthält, der mit der Sekundärwicklung über eine Diode ($DP_1$, $DP_2$) gekoppelt ist, die einen Spannungsabfall ($V_F$) verursacht, sodass die erste Spannung ($V_{PM}$/2, $V_{PM}$-2$V_F$), die während der Vormagnetisierungsperiode ($T_{ON2}$) an die Hilfswicklung ($L_{AUX}$') angelegt wird, um mindestens den Spannungsabfall ($V_F$) niedriger als die zweite Spannung ($V_{PM}$) ist.

**3.** Schaltwandler gemäß Anspruch 1 oder 2,
wobei die kapazitive Schaltung einen ersten Kondensator ($C_{PM1}$) und eine mit dem ersten Kondensator ($C_{PM1}$) verbundene erste Diode ($D_{P1}$) enthält und ferner einen zweiten Kondensator ($C_{PM2}$) und eine mit dem zweiten Kondensator ($C_{PM1}$) verbundene zweite Diode ($D_{P1}$) enthält, wobei der gemeinsame Schaltungsknoten zwischen dem ersten Kondensator ($C_{PM1}$) und der ersten Diode ($D_{P1}$) und der gemeinsame Schaltungsknoten zwischen dem zweiten Kondensator ($C_{PM2}$) und der zweiten Diode ($D_{P2}$) durch eine dritte Diode ($D_{P3}$) verbunden sind.

**4.** Schaltwandler gemäß einem der Ansprüche 1 bis 3,

wobei die Synchrongleichrichterschaltung (30) einen Transistor ($T_{SR}$) und einen Ausgangskondensator ($C_{OUT}$) enthält, der über den Transistor ($T_{SR}$) mit der Sekundärwicklung ($L_S$) gekoppelt ist, und
wobei die Synchrongleichrichterschaltung (30) eine Steuerschaltung (31) enthält, die so konfiguriert dazu ausgelegt ist, eine Spannung ($V_{SR}$) über einen Laststrompfad des Transistors ($T_{SR}$) zu erfassen und den Transistor ($T_{SR}$) einzuschalten, wenn die Spannung ($V_{SR}$) über den Laststrompfad des Transistors ($T_{SR}$) unter einen vordefinierten Schwellenpegel ($V_{SRTH}$) fällt.

**5.** Schaltwandler gemäß einem der Ansprüche 1 bis 4, ferner umfassend:
eine Steuerschaltung (10), die dazu ausgelegt ist, in jedem Schaltzyklus das erste Ansteuersignal ($S_1$) für den ersten

elektronischen Schalter ($T_1$) und ein zweites Ansteuersignal ($S_2$) für den zweiten elektronischen Schalter ($T_2$) zu erzeugen, wobei das erste Ansteuersignal ($S_1$) den ersten elektronischen Schalter ($T_1$) veranlasst, für eine Einschaltperiode ($T_{ON1}$) einzuschalten.

6. Schaltwandler gemäß Anspruch 5,
wobei entweder das erste Ansteuersignal ($S_1$) oder das zweite Ansteuersignal ($S_2$) mit einem Taktsignal synchronisiert ist.

7. Schaltwandler gemäß Anspruch 5 oder 6,
wobei im Betrieb die Hilfswicklung ($L_{AUX}$') während einer Entmagnetisierungsperiode ($T_{DEMAG}$), die direkt auf die Einschaltperiode ($T_{ON1}$) folgt, die zweite Spannung ($V_{PM}$) an die kapazitive Schaltung liefert.

8. Schaltwandler gemäß Anspruch 7,
wobei in jedem Schaltzyklus das zweite Ansteuersignal ($S_2$) den zweiten elektronischen Schalter ($T_2$) veranlasst, für die Vormagnetisierungsperiode ($T_{ON2}$), die nach der vorhergehenden Entmagnetisierungsperiode ($T_{DEMAG}$) auftritt, einzuschalten.

9. Schaltwandler gemäß einem der Ansprüche 1 bis 7, ferner umfassend:

   eine weitere Hilfswicklung ($L_{AUX}$) und
   eine Versorgungsschaltung (50), die mit der weiteren Hilfswicklung ($L_{AUX}$) gekoppelt ist und dazu ausgelegt ist, eine Versorgungsspannung ($V_{CC}$) für eine Steuerschaltung (10) des Schaltwandlers zu erzeugen.

10. Schaltwandler gemäß einem der Ansprüche 1 bis 9,
wobei der maximale Pegel der ersten an die Hilfswicklung ($L_{AUX}$') angelegten Spannung während der Vormagnetisierungsperiode ($T_{ON2}$) niedriger als der maximale Pegel der zweiten Spannung ($V_{PM}$) während einer Aufladephase ist, in der die kapazitive Schaltung aufgeladen wird.

11. Verfahren zum Betreiben eines Schaltwandlers, der umfasst:
einen Transformator mit einer Primärwicklung ($L_P$), einer Sekundärwicklung ($L_S$) und mindestens einer Hilfswicklung ($L_{AUX}$'); einen ersten elektronischen Schalter ($T_1$), der mit der Primärwicklung ($L_P$) gekoppelt ist; eine Synchrongleichrichterschaltung (30), die zwischen der Sekundärwicklung ($L_S$) und einem Ausgangsknoten des Schaltwandlers gekoppelt ist und einen Transistor ($T_{SR}$) und eine Steuervorrichtung (31) enthält, die dazu ausgelegt ist, den Transistor ($T_{SR}$) ein- und auszuschalten; und eine Vormagnetisierungsschaltung (60), die eine kapazitive Schaltung ($C_{PM}$, $D_{P1}$, $D_{P3}$; $C_{PM1}$, $C_{PM2}$, $D_{P1}$, $D_{P2}$, $D_{P3}$) und einen zweiten elektronischen Schalter ($T_2$) umfasst, der zwischen der Hilfswicklung ($L_{AUX}$') und der kapazitiven Schaltung angeschlossen ist; wobei das Verfahren umfasst:

   Ein- und Ausschalten eines durch die Primärwicklung fließenden Primärstroms ($i_P$) mithilfe des ersten elektronischen Schalters ($T_1$) gemäß einem ersten Ansteuersignal ($S_1$);
   Schließen des zweiten elektronischen Schalters ($T_2$) während einer Vormagnetisierungsperiode ($T_{ON2}$), um eine erste Spannung ($V_{PM}/2$, $V_{PM}-2V_F$), die durch die kapazitive Schaltung bereitgestellt wird, an die Hilfswicklung ($L_{AUX}$') anzulegen, und vor dem Schließen des zweiten elektronischen Schalters ($T_2$) Aufladen der kapazitiven Schaltung bis zu einer zweiten Spannung ($V_{PM}$), wenn der zweite elektronische Schalter ($T_2$) offen ist, wobei die erste Spannung niedriger als die zweite Spannung ist, sodass ein Einschalten des Transistors ($T_{SR}$) durch die Steuervorrichtung (31) in der Vormagnetisierungsperiode ($T_{ON2}$) vermieden wird.

12. Verfahren gemäß Anspruch 11,
wobei die Differenz zwischen der zweiten Spannung und der ersten Spannung mindestens teilweise durch einen Spannungsabfall an einer in der kapazitiven Schaltung enthaltenen Diode verursacht wird.

13. Verfahren gemäß Anspruch 11 oder 12,
wobei der maximale Pegel der ersten an die Hilfswicklung ($L_{AUX}$') angelegten Spannung während der Vormagnetisierungsperiode ($T_{ON2}$) niedriger als der maximale Pegel der zweiten Spannung ($V_{PM}$) während einer Aufladephase ist, in der die kapazitive Schaltung aufgeladen wird.

**Revendications**

1. Convertisseur de commutation qui comprend :

   un transformateur comprenant un enroulement ($L_P$) primaire, un enroulement ($L_S$) secondaire et au moins un enroulement ($L_{AUX}$') auxiliaire ;
   un premier interrupteur ($T_1$) électronique connecté à l'enroulement ($L_P$) primaire et configuré pour faire passer et empêcher de passer un courant ($i_p$) primaire dans l'enroulement primaire en fonction d'un premier signal ($S_1$) de commande ;
   un circuit (30) redresseur synchrone monté entre l'enroulement ($L_S$) secondaire et un nœud de sortie du convertisseur de commutation et ayant un transistor ($T_{SR}$) et une unité (31) de commande configurée pour mettre le transistor ($T_{SR}$) à l'état passant et bloqué ;
   un circuit (60) de pré-magnétisation, qui comprend un circuit ($C_{PM}$, $D_{P1}$ ; $D_{P3}$ ; $C_{PM1}$, $C_{PM2}$, $D_{P1}$, $D_{P2}$, $D_{P3}$) capacitif et un deuxième interrupteur (T2) électronique qui est monté entre l'enroulement ($L_{AUX}$') auxiliaire et le circuit ($C_{PM}$, $D_{P1}$ ; $D_{P3}$ ; $C_{PM1}$, $C_{PM2}$, $D_{P1}$, $D_{P2}$, $D_{P3}$) capacitif ;
   **caractérisé en ce que** le circuit capacitif est configuré pour appliquer une première tension ($V_{PM}/2$, $V_{PM}$-$2V_F$) à l'enroulement ($L_{AUX}$') auxiliaire pendant une durée ($T_{ON2}$) de prémagnétisation lorsque le deuxième interrupteur ($T_2$) électronique est fermé et pour être chargé jusqu'à une deuxième tension ($V_{PM}$) lorsque le deuxième interrupteur ($T_2$) électronique est ouvert, la première tension étant plus basse que la deuxième tension de manière à empêcher que le transistor ($T_{SR}$) soit mis à l'état passant par l'unité (31) de commande dans la durée ($T_{ON2}$) de prémagnétisation.

2. Convertisseur de commutation suivant la revendication 1,
   dans lequel le circuit capacitif a au moins un condensateur ($C_{PM}$, $C_{PM1}$, $C_{PM2}$) qui est connecté à l'enroulement secondaire par l'intermédiaire d'une diode ($DP_1$, $DP_2$), qui provoque une chute ($V_F$) de tension de manière à ce que la première tension ($V_{PM}/2$, $V_{PM}$-$2V_F$) appliquée à l'enroulement ($L_{AUX}$') auxiliaire pendant la durée ($T_{ON2}$) de prémagnétisation soit plus basse que la deuxième tension ($V_{PM}$) d'au moins la chute ($V_F$) de tension.

3. Convertisseur de commutation suivant la revendication 1 ou 2,
   dans lequel le circuit capacitif a un premier condensateur ($C_{PM1}$) et une première diode ($D_{P1}$) connectée au premier condensateur ($C_{PM1}$) et a en outre un deuxième condensateur ($C_{PM2}$) et une deuxième diode ($D_{P1}$) connectée au deuxième condensateur ($C_{PM1}$), dans lequel le noeud commun de circuit entre le premier condensateur ($C_{PM1}$) et la première diode ($D_{PM1}$) et le noeud commun de circuit entre le deuxième condensateur ($C_{PM2}$) et la deuxième diode ($D_{P2}$) sont connectés par une troisième diode ($D_{P3}$).

4. Convertisseur de commutation suivant l'une quelconque des revendications 1 à 3,

   dans lequel le circuit (30) redresseur synchrone a un transistor ($T_{SR}$) et un condensateur ($C_{OUT}$) de sortie connecté à l'enroulement ($L_S$) secondaire par l'intermédiaire du transistor ($T_{SR}$) et
   dans lequel le circuit (30) redresseur synchrone a un circuit (31) de commande configuré pour détecter une tension ($V_{SR}$) aux bornes d'un trajet de courant de charge et un transistor ($T_{SR}$) et pour mettre le transistor ($T_{SR}$) à l'état passant lorsque la tension ($V_{SR}$) aux bornes du trajet de courant de charge du transistor ($T_{SR}$) devient inférieure à un niveau ($V_{SRTH}$) de seuil défini à l'avance.

5. Convertisseur de commutation suivant l'une quelconque des revendications 1 à 4, comprenant en outre :
   un circuit (10) de commande configuré pour produire le premier signal ($S_1$) de commande du premier interrupteur ($T_1$) électronique et un deuxième signal ($S_2$) de commande du deuxième interrupteur ($T_2$) électronique dans chaque cycle de commutation, le premier signal ($S_1$) de commande faisant que le premier interrupteur ($T_1$) électronique se ferme pendant une durée ($T_{ON1}$) de fermeture.

6. Convertisseur de commutation suivant la revendication 5,
   dans lequel le premier signal ($S_1$) de commande ou le deuxième signal ($S_2$) de commande est synchronisé par un signal d'horloge.

7. Convertisseur de commutation suivant la revendication 5 ou 6,
   dans lequel pendant le fonctionnement l'enroulement ($L_{AUX}$') auxiliaire applique la deuxième tension ($V_{PM}$) au circuit capacitif pendant une durée ($T_{DEMAG}$) de démagnétisation qui suit directement la durée ($T_{ON1}$) de fermeture.

8. Convertisseur de commutation suivant la revendication 7,
dans lequel, dans chaque cycle de commutation, le deuxième signal ($S_2$) de commande fait que le deuxième interrupteur ($T_2$) électronique se ferme pendant la durée ($T_{ON2}$) de prémagnétisation qui se produit après la durée ($T_{DEMAG}$) précédente de démagnétisation.

9. Convertisseur de commutation suivant l'une quelconque des revendications 1 ou 7, comprenant en outre :

   un autre enroulement ($L_{AUX}$) auxiliaire et
   un circuit d'alimentation connecté à l'autre enroulement ($L_{AUX}$) auxiliaire et configuré pour appliquer une tension ($V_{CC}$) d'alimentation à un circuit (10) de commande du convertisseur de commutation.

10. Convertisseur de commutation suivant l'une quelconque des revendications 1 à 9,
dans lequel le niveau maximum de la première tension appliquée à l'enroulement ($L_{AUX}'$) auxiliaire pendant la durée ($T_{ON2}$) de prémagnétisation est plus bas que le niveau maximum de la deuxième tension ($V_{PM}$) pendant une phase de charge dans laquelle le circuit capacitif est chargé.

11. Procédé pour faire fonctionner un convertisseur de commutation qui comprend :

   un transformateur comprenant un enroulement ($L_P$) primaire, un enroulement ($L_S$) secondaire et au moins un enroulement ($L_{AUX}'$) auxiliaire ;
   un premier interrupteur ($T_1$) électronique connecté à l'enroulement ($L_P$) primaire ;
   un circuit (30) redresseur synchrone monté entre l'enroulement ($L_S$) secondaire et un noeud de sortie du convertisseur de commutation et ayant un transistor ($T_{SR}$) et une unité (31) de commande configurée pour mettre le transistor ($T_{SR}$) à l'état passant et bloqué ;
   un circuit (60) de pré-magnétisation, qui comprend un circuit ($C_{PM}$, $D_{P1}$ ; $D_{P3}$ ; $C_{PM1}$, $C_{PM2}$, $D_{P1}$, $D_{P2}$, $D_{P3}$) capacitif et un deuxième interrupteur ($T_2$) électronique qui est monté entre l'enroulement ($L_{AUX}'$) auxiliaire et le circuit ($C_{PM}$, $D_{P1}$ ; $D_{P3}$ ; $C_{PM1}$, $C_{PM2}$, $D_{P1}$, $D_{P2}$, $D_{P3}$) capacitif ;
   le procédé comprenant :

      commuter, en utilisant le premier interrupteur ($T_1$) électronique, un courant ($i_P$) primaire passant et ne passant pas dans l'enroulement primaire en fonction d'un premier signal ($S_1$) de commande ;
      fermer le deuxième interrupteur ($T_2$) électronique pendant une durée ($T_{ON2}$) de prémagnétisation pour appliquer une première tension ($V_{PM}/2$, $V_{PM}-2V_F$) qui est donnée par le circuit capacitif à l'enroulement ($L_{AUX}'$) auxiliaire et avant de fermer le deuxième interrupteur ($T_2$) électronique,
      charger le circuit capacitif jusqu'à une deuxième tension ($V_{PM}$) lorsque le deuxième interrupteur ($T_2$) électronique est ouvert, la première tension étant plus basse que la deuxième tension de manière à empêcher que le transistor ($T_{SR}$) soit mis à l'état passant par l'unité (31) de commande dans la durée ($T_{ON2}$) de prémagnétisation.

12. Procédé suivant la revendication 11,
dans lequel la différence entre la deuxième tension et la première tension est provoquée au moins en partie par une chute de tension aux bornes d'une diode incluse dans le circuit capacitif.

13. Procédé suivant la revendication 11 ou 12,
dans lequel le niveau maximum de la première tension appliquée à l'enroulement ($L_{AUX}'$) auxiliaire pendant la durée ($T_{ON2}$) de prémagnétisation est plus bas que le niveau maximum de la deuxième tension ($V_{PM}$) pendant une phase de charge, dans laquelle le circuit capacitif est chargé.

FIG. 1

FIG. 2

FIG. 3

FIG. 4

FIG. 5

FIG. 6

FIG. 7

pre-magnetization circuit 60

FIG. 8

pre-magnetization circuit 60

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160329814 A1
- US 20180241299 A1